# FASCICULE DE BREVET EUROPEEN

(11) **EP 4 411 538 B1**
(45) Date de publication et mention de la délivrance du brevet: **06.05.2026**
(21) Numéro de dépôt: 24153744.8
(22) Date de dépôt: 24.01.2024
(51) Int. Cl.: G06F 9/445, G06F 9/4401

(54) **PROCEDE DE PROTECTION D'ACCES DE PROGRAMMES DE DEMARRAGE**
VERFAHREN ZUM SCHUTZ DES ZUGRIFFS AUF STARTPROGRAMMEN
METHOD FOR PROTECTING ACCESS TO START-UP PROGRAMS

(30) Priorité: 03.02.2023 FR 2301052
(43) Date de publication de la demande: 07.08.2024
(73) Titulaire: STMicroelectronics International N.V., 1228 Plan-les-Ouates, Geneva (CH)
(72) Inventeur: BENHAMMADI, Jawad, 38800 PONT DE CLAIX (FR)
(74) Mandataire: Cabinet Beaumont

(56) Documents cités:
- FR-A1- 3 121 526
- GB-A- 2 557 305

## Description

### Domaine technique

La présente description concerne de façon générale les procédés d'émulation de programmes de démarrage dans une mémoire ainsi que les circuits mettant en oeuvre ces procédés.

### Technique antérieure

De nombreux circuits électroniques comme les microcontrôleurs utilisent un programme de démarrage (BOOT en anglais) qui est chargé dans une mémoire non volatile du circuit au démarrage pour exécuter ensuite une application de démarrage. Pour des raisons de sécurité, une fois exécuté, le programme de démarrage doit être rendu inaccessible de l'extérieur du circuit. Cela pose notamment problème lorsque plusieurs programmes de démarrage successifs doivent être exécutés.

GB 2 557 305 A concerne un microcontrôleur qui possède une unité logique de protection mémoire configurée pour accéder à un ensemble de registres de configuration de protection mémoire. Lorsqu'une requête tente d'accéder à une adresse mémoire située dans une zone protégée, l'unité logique de protection mémoire détermine si la requête satisfait aux critères d'accès de cette zone, lesquels dépendent des données stockées dans les registres de configuration de protection mémoire. Si les critères ne sont pas satisfaits, l'unité logique de protection mémoire bloque la requête et empêche toute écriture dans les registres de configuration de protection mémoire, sauf si ces derniers sont à l'état initial. Ainsi, une fois que le chargeur de démarrage a été exécuté, ce dernier écrira les valeurs appropriées dans les registres de configuration de protection de la mémoire ce qui aura pour effet d'empêcher non seulement toute modification de ces registres par d'autres logiciels mais aussi toute modification de la zone mémoire stockant le chargeur de démarrage.

FR 3 121 526 A1 concerne un procédé de démarrage sécurisé d'un dispositif de traitement, le procédé comprenant : - la génération, par un compteur monotone et lors d'une première phase de démarrage, d'une première valeur de comptage ; - la transmission, par le compteur monotone, de la première valeur de comptage à un circuit de contrôle d'accès d'une mémoire ; - la lecture, sur la base de la première valeur de comptage, de premières données stockées dans la mémoire ;- la génération, par ledit compteur et lors d'une deuxième phase de démarrage, d'une deuxième valeur de comptage supérieure à la première valeur de comptage, le circuit de contrôle d'accès de la mémoire étant configuré de sorte que la lecture des premières données ne soit pas autorisée sur la base de la deuxième valeur de comptage.

### Résumé de l'invention

Il existe un besoin de fournir un procédé qui permette la mise en oeuvre d'au moins trois programmes de démarrage tout en garantissant leur mise en sécurité après leur exécution.

Un mode de réalisation pallie tout ou partie des inconvénients des procédés connus.

L'invention est spécifiée par les revendications indépendantes annexées. En outre, des modes de réalisation préférés sont définis par les revendications dépendantes.

Un mode de réalisation prévoit un procédé de protection d'accès de N programmes de démarrage dans une mémoire, N étant supérieur à 2, dans lequel la taille d'une région d'accès interdit de la mémoire contenant les programmes de démarrage une fois exécutés augmente une fois chaque programme exécuté.

Dans un mode de réalisation, les programmes de démarrage sont chargés les uns après les autres dans des zones successives de la mémoire, l'accès à chaque zone étant bloqué une fois le programme concerné exécuté, par agrandissement de la région d'accès interdit.

Dans un mode de réalisation, un programme de démarrage à partir du deuxième est chargé dans la mémoire à la suite du programme précédent une fois que l'accès de ce dernier a été interdit par agrandissement de la région.

La taille de la région d'accès interdit de la mémoire est définie par le contenu d'un premier registre de mémorisation volatile, dont la valeur est incrémentée de la valeur d'agrandissement de la région à chaque fin d'exécution d'un programme de démarrage.

Dans un mode de réalisation, l'incrément de la valeur contenue dans le premier registre est en nombre de secteurs mémoire.

Le premier registre est monotone croissant.

Dans un mode de réalisation, le contenu d'un deuxième registre de mémorisation volatile comprend la valeur définissant un statut, autorisé ou interdit, de l'accès de la région.

Dans un mode de réalisation, le deuxième registre ne peut être réinitialisé que par une réinitialisation de la mémoire.

Dans un mode de réalisation, le deuxième registre est sur 1 bit.

Dans un mode de réalisation, le deuxième registre est sur plusieurs bits.

Dans un mode de réalisation, les deux valeurs définissant le statut de l'accès à ladite région sont distantes de plus d'un bit.

Dans un mode de réalisation, lorsque le contenu du deuxième registre est différent de l'une desdites deux valeurs, l'accès à la région est interdit jusqu'à réinitialisation de la mémoire.

Dans un mode de réalisation, lorsque le contenu du deuxième registre est différent de l'une desdites deux valeurs, le contenu du premier registre de mémorisation volatile ne peut plus être modifié.

Dans un mode de réalisation, une taille maximale de la région est prédéfinie, des programmes applicatifs pouvant être chargés uniquement hors de ladite région.

Un mode de réalisation prévoit un circuit électronique configuré pour mettre en oeuvre un des procédés ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de circuit intégré du type auquel s'appliquent les modes de réalisation décrits ;
la figure 2 illustre un mode de mise en œuvre d'un procédé d'émulation de plusieurs programmes de démarrage dans une mémoire ; et
la figure 3 illustre un autre mode de mise en œuvre d'un procédé d'émulation de plusieurs programmes de démarrage dans une mémoire.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

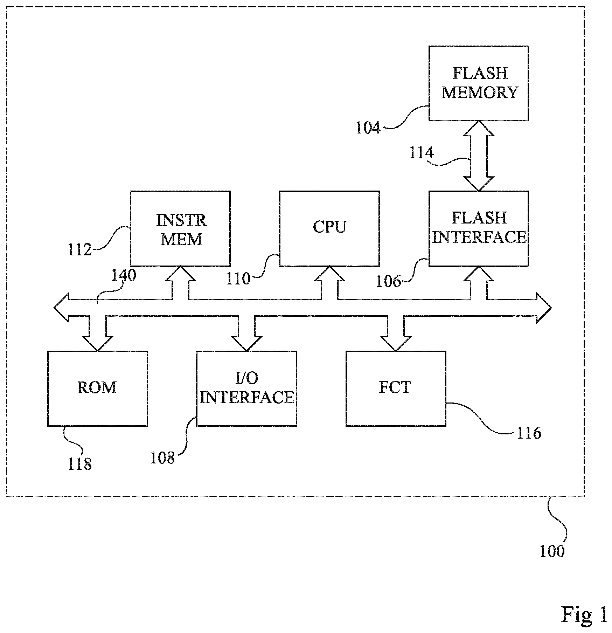

La figure 1 représente, de façon très schématique et sous forme de blocs, un exemple de circuit intégré 100 du type auquel s'appliquent les modes de réalisation décrits.

Le circuit 100 comprend une mémoire non-volatile 104 (FLASH MEMORY), par exemple de type mémoire FLASH, capable de communiquer, via un bus de communication 114, avec une interface de mémoire non-volatile 106 (FLASH INTERFACE) configurée pour écrire ou lire des données dans et depuis la mémoire non-volatile 104.

Le circuit 100 comprend en outre, par exemple, une unité de traitement 110 (CPU) comprenant un ou plusieurs processeurs sous contrôle d'instructions stockées dans une mémoire d'instructions 112 (INSTR MEM). La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et de commande). La mémoire FLASH 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le dispositif 100 peut intégrer d'autres circuits mettant en œuvre d'autres fonctions (par exemple, une ou plusieurs mémoires volatiles et/ou non-volatiles, d'autres unités de traitement), symbolisées par un bloc 116 (FCT) en figure 1. Parmi ces autres circuits, le circuit 100 comporte par exemple une mémoire morte ou statique 118 (ROM).

Les modes de réalisation décrits concernent l'émulation de programmes de démarrage dans la mémoire flash 104. Pour ce faire, les programmes de démarrage sont par exemple transférés directement vers la mémoire 104 lors de processus de programmation en usine. Cependant le contenu d'une mémoire flash est en principe modifiable. Or, on doit veiller, par exemple dans le cas de chargement de plusieurs systèmes d'exploitation, à ce qu'ils ne puissent pas être modifié une fois transférés en mémoire flash 104, sauf réinitialisation du système ou circuit 100.

Un exemple concerne les systèmes d'exploitation de type OEM, qui doivent être chargés lors des processus de fabrication du circuit 100 à l'initialisation du système en mémoire flash 104 afin de pouvoir ensuite être exécutés à chaque démarrage du système. Cependant, une fois en mémoire flash, l'accès au programme de démarrage doit être protégé vis-à-vis d'autres programmes de démarrage, de toute application ou d'un accès depuis l'extérieur du circuit afin d'éviter qu'il puisse être modifié. Pour ce faire, on prévoit de verrouiller l'accès à la zone de la mémoire flash contenant le programme de démarrage afin qu'il soit impossible d'y accéder hors redémarrage du circuit.

Une difficulté réside dans le fait de prévoir cette fonctionnalité alors même que plusieurs programmes de démarrage, de différents niveaux, sont susceptibles d'être transférés à la mémoire flash 104.

Les modes de réalisation décrits prévoient une augmentation de la taille d'une région d'accès interdit de la mémoire 104 contenant les programmes de démarrage une fois chaque programme exécuté.

Les programmes de démarrage de plus bas niveaux sont donc d'accès protégés vis-à-vis des nouveaux programmes de démarrage chargés et exécutés postérieurement.

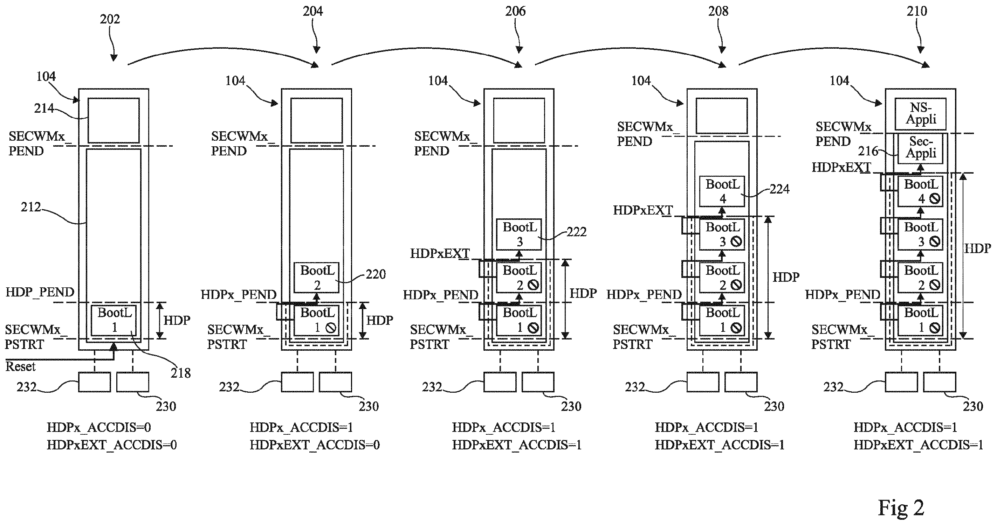

La figure 2 illustre un mode de mise en œuvre d'un procédé d'émulation de plusieurs programmes de démarrage dans la mémoire 104.

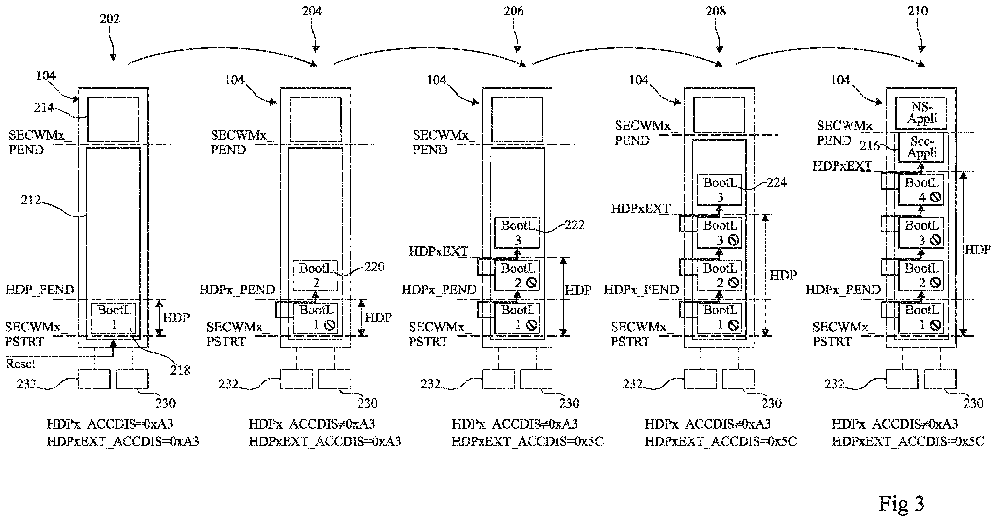

La figure 3 représente, sous forme de blocs, des étapes d'un autre mode de mise œuvre d'un procédé d'émulation de plusieurs programmes de démarrage dans la mémoire 104.

Dans l'exemple des figures 2 et 3, la mémoire 104 est partitionnée en une région 214 et une région 212 dont les dimensions sont définies par des octets d'option utilisateur (User Option Bytes en anglais) SECWMx_PEND et SECWMx_PSTRT qui sont chargés depuis une mémoire non volatile au démarrage, par exemple la mémoire 118. Les données inscrites dans la région 212 sont par exemple cryptées. Les données inscrites dans la région 214 ne sont par exemple pas cryptées ou cryptées selon un moindre niveau de sécurité que celles de la région 212. Bien que cela ne soit pas apparent sur les figures, la taille de la région 214 est, en pratique, nettement supérieure à la taille de la région 212 (dans un rapport d'au moins 10).

La mémoire 104 est couplée à un premier registre de mémorisation volatile 230 (HDPxEXT), dont la valeur ne peut qu'être incrémentée, c'est-à-dire que le premier registre est monotone croissant. La valeur contenue dans le premier registre est représentative de la taille de la région d'accès interdit 212 de la mémoire 104. La taille de la région d'accès interdit est par exemple comptée en nombre de secteurs mémoire.

La mémoire 104 est également couplée à un deuxième registre de mémorisation volatile 232 (HDPxEXT_ACCDIS). Le deuxième registre de mémorisation volatile 232 contient une valeur HDPxEXT_ACCDIS définissant un statut, autorisé (valeur 0) ou interdit (valeur 1), de l'accès de la région 212 dont la taille est définie par le contenu HDPxEXT du registre 230.

La mémoire 104 est en outre couplée à un autre registre de mémorisation volatile HDPx_ACCDIS qui définit la possibilité ou l'interdiction d'accès à la région comprise entre les valeurs HDP PEND et SECWMx PSTRT.

A titre d'exemple, les contenus SECWMx_PSTRT, HDPxEXT et SECWMx_PEND représentent des adresses de la mémoire 104, soit directement soit en nombre de secteurs.

Pour simplifier, dans la description qui suit, on utilise la même référence pour désigner un registre et la valeur qu'il contient.

Le procédé de la figure 2 comprend des étapes successives 202, 204, 206, 208 et 210.

A l'étape 202, qui correspond à une initialisation du circuit, la valeur de HDPx_ACCDIS est à 0, ce qui permet à un premier programme de démarrage (BootL1) d'être chargé dans un ou plusieurs secteurs 218 de la région 212, entre l'adresse SECWMx_PSTRT et une adresse HDPx_PEND définie par des octets d'option utilisateur avant le démarrage. Une fois chargé, le premier programme de démarrage est exécuté puis son accès est interdit par le passage de 0 à 1 de la valeur HDPx_ACCDIS. Une fois à 1, le registre HDPx_ACCDIS ne peut être remis à 0 que par réinitialisation de la mémoire. L'étape 202 correspond également à un démarrage ou une réinitialisation (Reset) du circuit, c'est-à-dire des phases qui n'ont pas lieu en usine lors de la fabrication ou de la programmation du circuit mais lors de l'utilisation standard du circuit. Dans ce là, le programme de démarrage (BootL1), qui a déjà été chargé dans un ou plusieurs secteurs 218 de la région 212 lors de la phase de production en usine, n'est pas rechargé mais seulement exécuté.

Dans une étape 204, qui correspond à une initialisation du circuit, on suppose qu'un deuxième programme de démarrage (BootL2) est ensuite écrit dans la région 212, par exemple à la suite du premier programme de démarrage. Puis le programme est exécuté. L'étape 204 correspond également à un démarrage ou une réinitialisation du circuit. Dans ce là, le deuxième programme de démarrage (BootL2), qui a déjà été chargé lors de la phase de production en usine, n'est pas rechargé mais seulement exécuté.

Dans une étape 206, qui correspond à une initialisation du circuit, le premier registre de mémorisation volatile HDPxEXT est incrémenté pour que sa valeur soit représentative de la taille de la région de la mémoire 212 comprenant les premier et deuxième programmes de démarrage. Le deuxième registre de mémorisation volatile HDPxEXT_ACCDIS prend la valeur 1, ce qui interdit l'accès à la région dont la taille est définie par le registre HDPxEXT. Le deuxième programme de démarrage est ainsi interdit d'accès pour un autre programme de démarrage par exemple BootL3. Une fois à 1, le registre HDPxEXT_ACCDIS ne peut être ramené à zéro que par réinitialisation de la mémoire.

On suppose, lorsque l'étape 206 correspond à une phase d'initialisation, qu'un troisième programme de démarrage 222 (BootL3) est ensuite écrit dans la région 212 à la suite du deuxième programme de démarrage. Puis le programme est exécuté. L'étape 206 correspond également à un démarrage ou une réinitialisation du circuit. Dans ce là, le troisième programme de démarrage 222, qui a déjà été chargé lors de la phase de production en usine, n'est pas rechargé mais seulement exécuté.

Dans une étape 208, qui correspond à une initialisation du circuit, le premier registre de mémorisation volatile HDPxEXT est incrémenté pour que sa valeur soit représentative de la taille de la région de la mémoire 212 comprenant les premier, deuxième et troisième programmes de démarrage. Le deuxième registre de mémorisation volatile HDPxEXT_ACCDIS reste à la valeur 1, ce qui interdit l'accès à la région, augmentée du troisième programme de démarrage, dont la taille est définie par le registre HDPxEXT.

Si, comme cela est illustré en figure 3, un programme de démarrage supplémentaire est à écrire, ce quatrième programme de démarrage 224 (BootL4) est ensuite écrit dans la région 212, par exemple à la suite du troisième programme de démarrage. De par la valeur de HDPxEXT_ACCDIS qui est à 1 et la valeur de HDPxEXT qui correspond alors à une taille de région englobant les premiers, deuxièmes et troisièmes programmes de démarrage, les premier, deuxième et troisième programmes de démarrage sont interdits d'accès pour le quatrième programme de démarrage. Le quatrième programme de démarrage est ensuite exécuté. L'étape 208 correspond également à un démarrage ou une réinitialisation du circuit. Dans ce là, le quatrième programme de démarrage 224, qui a déjà été chargé lors de la phase de production en usine, n'est pas rechargé mais seulement exécuté.

Dans une étape 210, le premier registre de mémorisation volatile HDPxEXT est incrémenté pour que sa valeur soit représentative de la taille de la région de la mémoire 212 comprenant les premier, deuxième, troisième et quatrième programmes de démarrage. Le deuxième registre de mémorisation volatile HDPxEXT_ACCDIS reste à la valeur 1, ce qui interdit l'accès à la région, augmentée du quatrième programme de démarrage, dont la taille est définie par le registre HDPxEXT.

Dans l'exemple de la figure 2, lorsque HDPxEXT atteint la valeur prédéfinie correspondant à une région englobant les quatre premiers programmes démarrage, des programmes applicatifs 216 (Sec-Appli, NS-Appli) peuvent être chargés hors de la région d'accès interdit entre SECWMx_PEND et HDPxEXT ou dans la région 214. Ces applications ne peuvent pas avoir accès à la région d'accès interdit définie avec HDPxEXT de par la valeur HDPxEXT_ACCDIS qui est 1 ce qui, dans l'exemple de la figure 2, interdit l'accès à la région dont la taille est définie par le registre HDPxEXT.

Une réinitialisation de la mémoire à n'importe quel moment des étapes 202 à 210, relance le procédé d'émulation à l'étape 202 par exemple.

La figure 3 illustre un autre mode de mise en œuvre d'un procédé d'émulation de plusieurs programmes de démarrage dans une mémoire non volatile.

Le procédé illustré en figure 3 est similaire à celui de la figure 2 à l'exception du fait que les registres HDPx_ACCDIS et HDPxEXT_ACCDIS sont cette fois sur plusieurs bits et plus particulièrement sur 8 bits dans l'exemple représenté.

Dans l'exemple associé à la figure 3, lorsque le contenu du registre HDPx_ACCDIS est égal à 0xA3, l'accès à la région définie par le registre HDP_PEND, i.e. entre HDP_PEND et SECWMx_PSTRT, est autorisé. Pour les autres valeurs du registre HDPx_ACCDIS, l'accès à la région relative définie par le registre HDP_PEND est interdit. De plus, l'accès à la valeur HDPx_ACCDIS dépend de sa valeur courante. Quand la valeur du registre HDPx_ACCDIS est différente de 0xA3, l'accès en écriture de ce même registre HDPx_ACCDIS est interdit.

Dans l'exemple associé à la figure 3, lorsque le registre HDPxEXT_ACCDIS a pour valeur 0xA3, l'accès à la région dont la taille est définie par HDPxEXT est autorisé.

Lorsque le registre HDPxEXT_ACCDIS a pour valeur 0x5C, l'accès à la région dont la taille est définie par le registre HDPxEXT, ainsi que la région définie par le compteur HDP, est interdit. Cependant, le registre HDPxEXT peut être incrémenté.

Pour d'autres valeurs du registre HDPxEXT_ACCDIS différentes de 0xA3 et 0x5C, l'accès à la région dont la taille est définie par le registre HDPxEXT est interdit et toute écriture dans le registre HDPxEXT est interdite jusqu'à une réinitialisation de la mémoire 104. La valeur du registre HDPxEXT_ACCDIS ne peut par ailleurs plus être modifiée avant une réinitialisation de la mémoire.

Le tableau [Table 1] ci-dessous résume les possibilités d'accès en écriture des registres HDPxEXT et HDPxEXT_ACCDIS en fonction de la valeur courante du registre HDPxEXT_ACCDIS.

**[Table 1]**

| Valeur du registre HDPxEXT_ACCDIS | Accès en écriture de : | |
|---|---|---|
| | HDPxEXT_ACCDIS | HDPxEXT |
| 0xA3 (valeur à la réinitialisation) | Autorisé | Autorisé |
| 0x5C | Autorisé si la valeur à écrire est différente de 0xA3. Autrement l'accès en écriture est interdit. | Autorisé si la nouvelle valeur est supérieure à la valeur courante. Autrement l'accès en écriture est interdit. |
| Autres | Accès en écriture interdit. | Accès en écriture interdit. |

Lorsque le registre HDPxEXT_ACCDIS a comme valeur courante 0xA3, alors l'accès en écriture des registres HDPxEXT et HDPxEXT_ACCDIS est autorisé. L'accès à la région dont la taille est définie par le registre HDPxEXT est autorisé.

Lorsque le registre HDPxEXT_ACCDIS a comme valeur courante 0x5C, alors l'accès en écriture du registre HDPxEXT_ACCDIS est autorisé si la valeur à écrire est différente de 0xA3. Autrement l'accès en écriture de HDPxEXT_ACCDIS est interdit.

Lorsque le registre HDPxEXT_ACCDIS a comme valeur courante 0x5C, alors l'accès en écriture du registre HDPxEXT est autorisé si la nouvelle valeur à écrire est supérieure à la valeur courante, autrement dit si le registre HDPxEXT est incrémenté. Autrement l'accès en écriture est interdit.

Enfin, lorsque le contenu du registre HDPxEXT_ACCDIS est différent de l'une des deux valeurs 0xA3 et 0x5C, l'accès en écriture des registres HDPxEXT et HDPxEXT_ACCDIS est interdit et l'accès à la région dont la taille est définie par le registre HDPxEXT est interdit jusqu'à réinitialisation de la mémoire.

Dans l'étape 202 de la figure 3, après réinitialisation, les registres HDPx_ACCDIS et HDPxEXT_ACCDIS ont la valeur 0xA3, autorisant l'écriture et la lecture dans la région dont la taille est définie par le registre HDP_PEND.

Dans l'étape 204 de la figure 3, le registre HDPxEXT_ACCDIS conserve la valeur 0xA3 tandis que le registre HDPx_ACCDIS est mis à une valeur différente de 0xA3, ce qui interdit l'accès à la région dont la taille est définie par le registre HDP_PEND. Une fois le registre HDPx_ACCDIS mis à une valeur différente de 0xA3, alors il n'est plus possible de la modifier jusqu'à réinitialisation de la mémoire. L'accès à la région définie par le registre HDP_PEND est donc interdit jusqu'à réinitialisation.

Dans l'étape 206 de la figure 3, le registre HDPxEXT_ACCDIS prend la valeur 0x5C, ce qui interdit l'accès à la région dont la taille est définie par le registre HDPxEXT. Ce dernier peut néanmoins être incrémenté après l'exécution du programme de démarrage BootL2.

Dans les étapes 208 et 210 de la figure 3, le registre HDPxEXT_ACCDIS reste à la valeur 0x5C, ce qui interdit l'accès à la région dont la taille est définie par le registre HDPxEXT. Ce dernier est néanmoins incrémenté après l'exécution des programmes de démarrage BootL3 et BOOTL4, ce qui permet d'interdire l'accès à la région dont la taille incrémentée à chaque étape est définie par le registre, c'est-à-dire la région entre les valeurs contenues dans les registres HDPx_PEND et HDPxEXT. L'accès à la région comprise entre les valeurs contenues dans les registres HDPx_PEND et SECWMx_PSTRT est déjà interdite d'accès avec la valeur prise par le registre HDPx_ACCDIS.

Les valeurs 0xA3 et 0x5C sont choisies pour être suffisamment éloignées de sorte qu'un changement de ces valeurs, provoqué par une attaque ou une perturbation, ne donne pas lieu à rendre possible l'accès à une région d'accès défini comme interdit ou ne donne pas lieu à un déni de service. Ces valeurs constituent cependant des exemples et d'autres valeurs sont envisageables pourvu de respecter une faible probabilité pour qu'une attaque ou perturbation fasse basculer le contenu du registre de l'une à l'autre valeur. Typiquement, il faut que les deux valeurs choisies soient distantes d'au moins deux bits.

Par rapport au procédé de la figure 2, le fait que le registre HDPxEXT_ACCDIS puissent avoir un effet sur l'accès à la région HDPxEXT avec trois valeurs (0xA3, 0x5C et n'importe quelle autre valeur) permet d'obtenir une sécurisation optimale contre des attaques ou des perturbations externes. En particulier, cela évite qu'une perturbation volontaire (attaque) ou accidentelle ne fasse changer la valeur du registre HDPxEXT_ACCDIS à 0, ce qui rendrait l'accès aux programmes de démarrage de la région HDPxEXT possible. Selon un autre exemple, cela évite un incrément du registre HDPxEXT au-delà du niveau applicatif Sec-Appli ou NS-Appli et évite une interdiction d'accès de ces applications et un déni de service.

En outre, le mode de réalisation présenté en lien avec la figure 3 permet d'émuler un nombre de programmes de démarrage supérieur à 2.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, même si des valeurs des registres HDPx_ACCDIS, HDPxEXT_ACCDIS et HDPxEXT ont été présentées, en lien avec les différents modes de réalisation, avec des valeurs 0 et 1, ou 0xA3 et 0x5C, la personne de l'art pourra implémenter d'autres valeurs pourvu de respecter les fonctionnalités décrites.

Enfin, la mise en oeuvre pratique des modes de réalisation et variantes décrits est à la portée de la personne du métier à partir des indications fonctionnelles données ci-dessus, en particulier, pour ce qui est du nombre de programmes de démarrage susceptibles d'être émulés.

## Revendications

1. Procédé de protection d'accès de N programmes de démarrage (BootL1, BootL2, BootL3, BootL4) dans une mémoire (104), N étant supérieur à 2, dans lequel la taille d'une région d'accès interdit de la mémoire (HDP) contenant les programmes de démarrage une fois exécutés augmente une fois chaque programme exécuté ;
la taille de la région d'accès interdit de la mémoire étant définie par le contenu d'un premier registre de mémorisation volatile (HDPxEXT), dont la valeur est incrémentée de la valeur d'agrandissement de la région à chaque fin d'exécution d'un programme de démarrage; et le premier registre (HDPxEXT) étant monotone croissant.

2. Procédé selon la revendication 1, dans lequel les programmes de démarrage sont chargés les uns après les autres dans des zones successives de la mémoire (218, 220, 222, 224), l'accès à chaque zone étant bloqué une fois le programme concerné exécuté, par agrandissement de la région d'accès interdit.

3. Procédé selon la revendication 1 ou 2, dans lequel un programme de démarrage à partir du deuxième est chargé dans la mémoire à la suite du programme précédent une fois que l'accès de ce dernier a été interdit par agrandissement de la région.

4. Procédé selon la revendication 3, dans lequel l'incrément de la valeur contenue dans le premier registre (HDPxEXT) est en nombre de secteurs mémoire.

5. Procédé selon l'une quelconque des revendications 1 à 4, dans lequel le contenu d'un deuxième registre de mémorisation volatile (HDPxEXT_ACCDIS) comprend la valeur définissant un statut, autorisé ou interdit, de l'accès de la région.

6. Procédé selon la revendication 5, dans lequel le deuxième registre (HDPxEXT_ACCDIS) ne peut être réinitialisé que par une réinitialisation de la mémoire.

7. Procédé selon la revendication 5 ou 6, dans lequel le deuxième registre est sur plusieurs bits.

8. Procédé selon la revendication 7, dans lequel les deux valeurs définissant le statut de l'accès à ladite région sont distantes de plus d'un bit.

9. Procédé selon l'une quelconque des revendications 5 à 8, dans lequel lorsque le contenu du deuxième registre (HDPxEXT_ACCDIS) est différent de l'une desdites deux valeurs, l'accès à la région est interdit jusqu'à réinitialisation de la mémoire.

10. Procédé selon l'une quelconque des revendications 5 à 9, dans lequel lorsque le contenu du deuxième registre (HDPxEXT_ACCDIS) est différent de l'une desdites deux valeurs, le contenu du premier registre de mémorisation volatile (HDPxEXT) ne peut plus être modifié.

11. Procédé selon l'une quelconque des revendications 1 à 10, dans lequel une taille maximale de la région (HDP) est prédéfinie, des programmes applicatifs pouvant être chargés uniquement hors de ladite région.

12. Circuit électronique configuré pour mettre en oeuvre le procédé selon l'une quelconque des revendications 1 à 11.

## Patentansprüche

1. Verfahren zum Emulieren von N Startprogrammen (BootL1, BootL2, BootL3, BootL4) in einem Speicher (104), wobei N größer als 2 ist, wobei die Größe einer Nicht-Zugriffs-Region des Speichers (HDP), die die Startprogramme nach deren Ausführung enthält, ansteigt, sobald jedes Programm ausgeführt worden ist; wobei die Größe der Nicht-Zugriffs-Region des Speichers durch den Inhalt eines ersten flüchtigen Speicher-Registers (HDPxEXT) definiert ist, das seinen Wert bei jedem Ende einer Ausführung eines Startprogramms um den Regions-Vergrößerungs-Wert inkrementiert; und wobei das erste Register (HDPxEXT) monoton ansteigend ist.

2. Verfahren nach Anspruch 1, wobei die Startprogramme nacheinander in aufeinanderfolgende Zonen (218, 220, 222, 224) des Speichers geladen werden, wobei der Zugriff auf jede Zone blockiert wird, sobald das betreffende Programm ausgeführt worden ist, durch Vergrößerung der Nicht-Zugriffs-Region.

3. Verfahren nach Anspruch 1 oder 2, wobei ein Startprogramm, beginnend vom zweiten, in den Speicher geladen wird, nachdem das vorhergehende Programm ausgeführt worden ist, sobald der Zugriff darauf durch Vergrößerung der Region geschlossen worden ist.

4. Verfahren nach Anspruch 3, wobei die Inkrementierung des im ersten Register (HDPxEXT) enthaltenen Wertes in einer Anzahl von Speicher-Sektoren angegeben ist.

5. Verfahren nach einem der Ansprüche 1 bis 4, wobei der Inhalt eines zweiten flüchtigen Speicher-Registers (HDPxEXT_ACCDIS) den Wert aufweist, der einen Status, autorisiert oder geschlossen, des Zugriffs auf die Region definiert.

6. Verfahren nach Anspruch 5, wobei das zweite Register (HDPxEXT_ACCDIS) nur durch ein Zurücksetzen des Speichers zurückgesetzt werden kann.

7. Verfahren nach Anspruch 5 oder 6, wobei das zweite Register über eine Vielzahl von Bits verfügt.

8. Verfahren nach Anspruch 7, wobei die zwei Werte, die den Status des Zugriffs auf die Region definieren, um mehr als ein Bit voneinander entfernt sind.

9. Verfahren nach einem der Ansprüche 5 bis 8, wobei, wenn der Inhalt des zweiten Registers (HDPxEXT_ACCDIS) von einem der zwei Werte verschieden ist, der Zugriff auf die Region geschlossen ist, bis der Speicher zurückgesetzt wird.

10. Verfahren nach einem der Ansprüche 5 bis 9, wobei, wenn der Inhalt des zweiten Registers (HDPxEXT_ACCDIS) von einem der zwei Werte verschieden ist, der Inhalt des ersten flüchtigen Speicher-Registers (HDPxEXT) nicht mehr geändert werden kann.

11. Verfahren nach einem der Ansprüche 1 bis 10, wobei eine maximale Größe der Region (HDP) vordefiniert ist, und Anwendungs-Programme nur außerhalb der Region geladen werden können.

12. Elektronische Schaltung, die zum Implementieren des Verfahrens nach einem der Ansprüche 1 bis 11 eingerichtet ist.

## Claims

1. Method of emulation of N boot programs (BootL1, BootL2, BootL3, BootL4) in a memory (104), N being greater than 2, wherein the size of a no-access region of the memory (HDP) containing the boot programs once executed increases once each program has been executed;
the size of the no-access region of the memory being defined by the content of a first volatile storage register (HDPxEXT), having its value incremented by the region enlargement value at each end of an execution of a boot program; and
the first register (HDPxEXT) being monotonously increasing.

2. Method according to claim 1, wherein the boot programs are loaded one after the others into successive zones (218, 220, 222, 224) of the memory, the access to each zone being blocked once the concerned program has been executed, by enlargement of the no-access region.

3. Method according to claim 1 or 2, wherein a boot program, starting from the second one, is loaded into the memory after the previous program once the access thereto has been closed by enlargement of the region.

4. Method according to any of claim 3, wherein the increment of the value contained in the first register (HDPxEXT) is in number of memory sectors.

5. Method according to any of claims 1 to 4, wherein the content of a second volatile storage register (HDPxEXT_ACCDIS) comprises the value defining a status, authorized or closed, of the access to the region.

6. Method according to claim 5, wherein the second register (HDPxEXT_ACCDIS) can only be reset by a resetting of the memory.

7. Method according to claim 5 or 6, wherein the second register is over a plurality of bits.

8. Method according to claim 7, wherein the two values defining the status of the access to said region are distant by more than one bit.

9. Method according to any of claims 5 to 8, wherein when the content of the second register (HDPxEXT_ACCDIS) is different from one of said two values, the access to the region is closed until the resetting of the memory.

10. Method according to any of claims 5 to 9, wherein when the content of the second register (HDPxEXT_ACCDIS) is different from one of said two values, the content of the first volatile storage register (HDPxEXT) can no longer be changed.

11. Method according to any of claims 1 to 10, wherein a maximum size of the region (HDP) is predefined, and application programs can only be loaded outside said region.

12. Electronic circuit configured to implement the method according to any of claims 1 to 11.
